(19) Europäisches Patentamt
European Patent Office
Office européen des brevets

(11) EP 2 219 456 B1

(12) **EUROPEAN PATENT SPECIFICATION**

(45) Date of publication and mention of the grant of the patent:
**09.09.2015 Bulletin 2015/37**

(21) Application number: **08851006.0**

(22) Date of filing: **10.11.2008**

(51) Int Cl.:
*A01N 47/40* (2006.01) *A01N 43/32* (2006.01)
*A01N 43/40* (2006.01) *A01N 43/42* (2006.01)
*A01N 43/653* (2006.01) *A01N 43/88* (2006.01)
*A01N 47/12* (2006.01) *A01N 47/34* (2006.01)
*A01P 3/00* (2006.01) *A01P 7/00* (2006.01)

(86) International application number:
**PCT/EP2008/065213**

(87) International publication number:
**WO 2009/062905 (22.05.2009 Gazette 2009/21)**

(54) **PESTICIDAL MIXTURES COMPRISING CYANOSULFOXIMINE COMPOUNDS**

PESTIZIDMISCHUNGEN MIT CYANOSULFOXIMIN-VERBINDUNGEN

MELANGES PESTICIDES COMPRENANT DES COMPOSES DE CYANOSULFOXIMINES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.11.2007 US 988618 P**

(43) Date of publication of application:
**25.08.2010 Bulletin 2010/34**

(73) Proprietor: **BASF SE**
**67056 Ludwigshafen (DE)**

(72) Inventors:
- **BREUNINGER, Delphine**
  **67240 Bobenheim-Roxheim (DE)**
- **BASTIAANS, Henricus, Maria, Martinus**
  **61250 Usingen (DE)**
- **VON DEYN, Wolfgang**
  **67435 Neustadt (DE)**
- **POHLMAN, Matthias**
  **67251 Freinsheim (DE)**
- **LANGEWALD, Jürgen**
  **68165 Mannheim (DE)**
- **HADEN, Egon**
  **67061 Ludwigshafen (DE)**

(56) References cited:
**WO-A-2006/060029** **WO-A-2007/095229**
**WO-A-2008/104503** **WO-A-2008/125410**
**WO-A1-2010/040623** **WO-A2-2010/023171**
**US-A1- 2005 228 027** **US-A1- 2007 043 086**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 219 456 B1

## Description

The present invention relates to mixtures of active ingredients having synergistically enhanced action and to methods comprising applying said mixtures.

One typical problem arising in the field of pest control lies in the need to reduce the dosage rates of the active ingredient in order to reduce or avoid unfavorable environmental or toxicological effects whilst still allowing effective pest control.

Another problem encountered concerns the need to have available pest control agents which are effective against a broad spectrum of pests.

Another problem underlying the present invention is the desire for compositions that improve plants, a process which is commonly and hereinafter referred to as "plant health". For example, advantageous properties that may be mentioned are improved crop characteristics including: emergence, crop yields, protein content, more developed root system, tillering increase, increase in plant height, bigger leaf blade, less dead basal leaves, stronger tillers, greener leaf color, pigment content, photosynthetic activity, less fertilizers needed, less seeds needed, more productive tillers, earlier flowering, early grain maturity, less plant verse (lodging), increased shoot growth, enhanced plant vigor, increased plant stand and early germination; or any other advantages familiar to a person skilled in the art. Methods for improving the health of plants by applying active compounds to the plants or the locus are a general need.

Another difficulty in relation to the use of pesticides is that the repeated and exclusive application of an individual pesticidal compound leads in many cases to a rapid selection of pests which have developed natural or adapted resistance against the active compound in question.

It is also an object of the present invention, with a view to reducing the application rates and broadening the activity spectrum of the active compounds I and II, to provide mixtures which, at a reduced total amount of active compounds applied, have improved activity against harmful fungi and animal pests.

It was therefore an object of the present invention to provide pesticidal mixtures which solve the problems outlined above.

The combating of harmful phytopathogenic fungi is in many regions not the only problem the farmer has to face. Also harmful insects can cause a great damage to crops and other plants. An efficient combination of fungicidal and insecticidal activity is desirable to overcome this problem. Thus, it is a further object of the present invention to provide a mixture which, on the one hand, has good fungicidal activity, and, on the other hand, good insecticidal activity, resulting in a broader pesticidal spectrum of action.

We have found that this object is in part or in whole achieved by the combination of active compounds defined as in the following.

The present invention relates to pesticidal mixtures comprising, as active compounds,

1) as active compound I at least one insecticidal compound of formula I

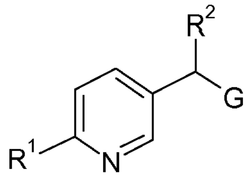

formula (I)

wherein

G is selected from

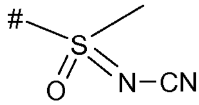

(G¹)

or

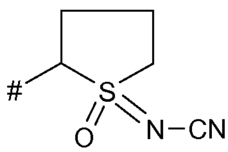

(G²)

and wherein # denotes the bonding in formula I;

$R^1$ is Cl or $CF_3$

and

$R^2$ is selected from hydrogen, chloro, $CH_3$ or $C_2H_5$;

or an enantiomer or a diastereomer thereof, pure or as mixtures of these enantiomers and/or diastereomers and

2) as active compound II at least one fungicidal compound selected 2. from:

epoxiconazole, tebuconazole, fluoxastrobin, picoxystrobin, pyraclostrobin, quinoxyfen, benthiavalicarb, cymoxanil and dithianon;

in a synergistically effective amount.

The active compounds I of the formula I, their preparation and their action against insect and acarid pests have been described in US2005/0228027, WO 2006/060029 and in WO 2007/095229. Preparation methods of active compounds I of formula I can be found therein.

The active compounds II mentioned above, their preparation and their action against harmful fungi are generally known (cf., for example, http:/www.hclrss.demon.co.uk/index.html); they are commercially available.
epoxiconazole, (2RS,3SR)-1-[3-(2-chlorophenyl)-2,3-epoxy-2-(4-fluorophenyl)propyl]-1H-1,2,4-triazole (EP-A 196 038);
tebuconazole, 1-(4-chlorophenyl)-4,4-dimethyl-3-[1,2,4]triazol-1-ylmethylpentan-3-ol
dithianon, 5,10-dioxo-5,10-dihydronaphtho[2,3-b][1,4]dithiin-2,3-dicarbonitrile (GB 857 383);
quinoxyfen, 5,7-dichloro-4-(4-fluorophenoxy)quinoline (US 5 240 940);
flubenthiavalicarb (benthiavalicarb), isopropyl {(S)-1-[(1R)-1-(6-fluorobenzothiazol-2-yl)-ethylcarbamoyl]-2-methylpropyl}carbamate (JP-A 09/323 984);
cymoxanil, 1-(2-cyano-2-methoxyiminoacetyl)-3-ethylurea (US 3 957 847);
fluoxastrobin, (E)-{2-[6-(2-chlorophenoxy)-5-fluoropyrimidin-4-yloxy]phenyl}(5,6-dihydro-1,4,2-dioxazin-3-yl)methanone O-methyloxime (WO 97/27189);
picoxystrobin, methyl 3-methoxy-2-[2-(6-trifluoromethylpyridin-2-yloxymethyl)phenyl]acrylate (EP-A 278 595);
pyraclostrobin, methyl N-{2-[1-(4-chlorophenyl)-1H-pyrazol-3-yloxymethyl]phenyl}(N-methoxy)carbamate (WO 96/01256);

We have accordingly found that several objects can be achieved by the mixtures, defined at the outset, of the active compounds I and II. Moreover, we have found that simultaneous, that is joint or separate, application of at least one compound I and at least one of the active compounds II or successive application of at least one of the compound(s) I and at least one of the active compounds II allows better control of harmful fungi than is possible with the individual compounds alone (synergistic mixtures).

Moreover, the present invention relates to:

- agricultural compositions comprising a mixture of at least one active compound I and at least one active compound II;
- the use of a mixture of at least one active compound I and at least one active compound II for combating animal pests;
- the use of a mixture of at least one active compound I and at least one active compound II for combating phytopathogenic harmful fungi;
- a method of combating animal pests which comprises contacting the animal pests, their habit, breeding ground, food supply, plant, seed, soil, area, material or environment in which the animal pests are growing or may grow, or the materials, plants, seeds, soils, surfaces or spaces to be protected from animal attack or infestation with a pesticidally effective amount of a mixture of at least one active compound I and at least one active compound II;
- a method for protecting crops from attack or infestation by animal pests and/or phythopathogenic harmful fungi, which comprises contacting a crop with a mixture of at least one active compound I and at least one active compound II;
- a method for the protection of seeds from soil insects and of the seedlings' roots and shoots from soil and foliar insects and/or phythopathogenic harmful fungi comprising contacting the seeds before sowing and/or after pregermination with a mixture of at least one active compound I and at least one active compound II;
  and
- seeds comprising a mixture of at least one active compound I and at least one active compound II.

The compounds I can be used as synergists for a large number of different fungicidal active compounds. By simultaneous, that is joint or separate, application of compound(s) I with at least one active compound II, the fungicidal and/or insecticidal activity is increased in a superadditive manner.

The compounds I can be present in different crystal modifications, which may differ in biological activity.

Preferences

Preferences of insecticidal cyanosulfoximine compound I of formula I

With regard to their use in the pesticidal mixtures of the present invention, active compounds I of formula I are preferred, wherein

$R^1$ is $CF_3$

or an enantiomer or a diastereomer thereof, pure or as mixtures of these enantiomers and/or diastereomers.

With regard to their use in the pesticidal mixtures of the present invention, active compounds I of formula I are preferred, wherein

$R^1$ is Cl

or an enantiomer or a diastereomer thereof, pure or as mixtures of these enantiomers and/or diastereomers.

With regard to their use in the pesticidal mixtures of the present invention, active compounds I of formula I are preferred, wherein

G is $G^1$
and
$R^2$ is $CH_3$

or an enantiomer or a diastereomer thereof, pure or as mixtures of these enantiomers and/or diastereomers.

With regard to their use in the pesticidal mixtures of the present invention, active compounds I of formula I are also preferred, wherein

G is $G^1$
and
$R^2$ is hydrogen, chloro, or $C_2H_5$;

or an enantiomer or a diastereomer thereof, pure or as mixtures of these enantiomers and/or diastereomers.

With regard to their use in the pesticidal mixtures of the present invention, active compounds I of formula I are also preferred, wherein

G is $G^2$
and
$R^2$ is hydrogen

or an enantiomer or a diastereomer thereof, pure or as mixtures of these enantiomers and/or diastereomers.

Preferred insectidal cyanosulfoximine compound I of formula I are given in the following table:

Table C.I:

| Compound I no. | G | $R^1$ | $R^2$ |
|---|---|---|---|
| C.I.1 | $G^1$ | Cl | H |
| C.I.2 | $G^1$ | Cl | $CH_3$ |
| C.I.3 | $G^1$ | Cl | $CH_2$-$CH_3$ |
| C.I.4 | $G^1$ | Cl | Cl |
| C.I.5 | $G^2$ | Cl | H |
| C.I.6 | $G^2$ | Cl | $CH_3$ |
| C.I.7 | $G^2$ | Cl | $CH_2$-$CH_3$ |
| C.I.8 | $G^2$ | Cl | Cl |
| C.I.9 | $G^1$ | $CF_3$ | H |
| C.I.10 | $G^1$ | $CF_3$ | $CH_3$ |

(continued)

| Compound I no. | G | $R^1$ | $R^2$ |
|---|---|---|---|
| C.I.11 | $G^1$ | $CF_3$ | $CH_2$-$CH_3$ |
| C.I.12 | $G^1$ | $CF_3$ | Cl |
| C.I.13 | $G^2$ | $CF_3$ | H |
| C.I.14 | $G^2$ | $CF_3$ | $CH_3$ |
| C.I.15 | $G^2$ | $CF_3$ | $CH_2$-$CH_3$ |
| C.I.16 | $G^2$ | $CF_3$ | Cl |

The compounds of formula I include racemic mixtures, individual pure enantiomers and diasteroemers and optically active mixtures.

Preference is given to mixtures of a compound of the formula I in table C.I with at least one active compound selected from the group of the azoles.

Preference is also given to mixtures of a compound of the formula I in table C.I with at least one active compound selected from the group of the strobilurins.

Preference is furthermore also given to mixtures of a compound of the formula I in table C.I with at least one active compound selected from the group of the heterocyclic compounds.

Preference is furthermore also given to mixtures of a compound of the formula I in table C.I with at least one active compound selected from the group of the carbamates.

Preference is furthermore also given to mixtures of a compound of the formula I in table C.I with at least one active compound selected from the group of other various

Preferences of fungicidal compound II

Preference is given to mixtures of a compound of the formula I with at least one active compound II selected from the group of azoles consisting of epoxiconazole and tebuconazole.

Preference is given to mixtures of a compound of the formula I with at least one active compound II selected from the group of the strobilurins consisting of fluoxastrobin, picoxystrobin and pyraclostrobin.

Preference is given to mixtures of a compound of the formula I with at least one active compound II selected from the heterocyclic compound, quinoxyfen.

Preference is also given to mixtures of a compound of the formula I with at least one active compound II selected from the carbamate, flubenthiavalicarb (benthiavalicarb).

Preference is also given to mixtures of a compound of the formula I with at least one active compound II selected from the other fungicides, dithianon and cymoxanil.

High Preference is given to the following combinations of insecticidal compounds I with fungicidal compounds II in tables A to F.

Table A

| Mixture no. | Active compound I | Active compound II |
|---|---|---|
| M-A.1 | C.I.1 | benomyl |
| M-A.2 | C.I.2 | benomyl |
| M-A.3 | C.I.3 | benomyl |
| M-A.5 | C.I.5 | benomyl |
| M-A.6 | C.I.6 | benomyl |
| M-A.7 | C.I.7 | benomyl |
| M-A.8 | C.I.8 | benomyl |
| M-A.33 | C.1.1 | epoxiconazole |
| M-A.34 | C.I.2 | epoxiconazole |
| M-A.35 | C.I.3 | epoxiconazole |
| M-A.36 | C.I.4 | epoxiconazole |

(continued)

| Mixture no. | Active compound I | Active compound II |
|---|---|---|
| M-A.37 | C.I.5 | epoxiconazole |
| M-A.38 | C.I.6 | epoxiconazole |
| M-A.39 | C.I.7 | epoxiconazole |
| M-A.40 | C.I.8 | epoxiconazole |
| M-A.41 | C.I.9 | epoxiconazole |
| M-A.42 | C.I.10 | epoxiconazole |
| M-A.43 | C.I.11 | epoxiconazole |
| M-A.44 | C.I.12 | epoxiconazole |
| M-A.45 | C.I.13 | epoxiconazole |
| M-A.46 | C.I.14 | epoxiconazole |
| M-A.47 | C.I.15 | epoxiconazole |
| M-A.48 | C.I.16 | epoxiconazole |
| M-A.145 | C.I.1 | tebuconazole |
| M-A.146 | C.I.2 | tebuconazole |
| M-A.147 | C.I.3 | tebuconazole |
| M-A.148 | C.I.4 | tebuconazole |
| M-A.149 | C.I.5 | tebuconazole |
| M-A.150 | C.I.6 | tebuconazole |
| M-A.151 | C.I.7 | tebuconazole |
| M-A.152 | C.I.8 | tebuconazole |
| M-A.153 | C.I.9 | tebuconazole |
| M-A.154 | C.I.10 | tebuconazole |
| M-A.155 | C.I.11 | tebuconazole |
| M-A.156 | C.I.12 | tebuconazole |
| M-A.157 | C.I.13 | tebuconazole |
| M-A.158 | C.I.14 | tebuconazole |
| M-A.159 | C.I.15 | tebuconazole |
| M-A.160 | C.I.16 | tebuconazole |

Table B

| Mixture no. | Active compound I | Active compound II |
|---|---|---|
| M-B.1 | C.I.1 | pyraclostrobin |
| M-B.2 | C.I.2 | pyraclostrobin |
| M-B.3 | C.I.3 | pyraclostrobin |
| M-B.4 | C.I.4 | pyraclostrobin |
| M-B.5 | C.I.5 | pyraclostrobin |
| M-B.6 | C.I.6 | pyraclostrobin |

(continued)

| Mixture no. | Active compound I | Active compound II |
|---|---|---|
| M-B.7 | C.I.7 | pyraclostrobin |
| M-B.8 | C.I.8 | pyraclostrobin |
| M-B.9 | C.I.9 | pyraclostrobin |
| M-B.10 | C.I.10 | pyraclostrobin |
| M-B.11 | C.I.11 | pyraclostrobin |
| M-B.12 | C.I.12 | pyraclostrobin |
| M-B.13 | C.I.13 | pyraclostrobin |
| M-B.14 | C.I.14 | pyraclostrobin |
| M-B.15 | C.I.15 | pyraclostrobin |
| M-B.16 | C.I.16 | pyraclostrobin |

Table F

| Mixture no. | Active compound I | Active compound II |
|---|---|---|
| M-F.17 | C.1.1 | dithianon |
| M-F.18 | C.I.2 | dithianon |
| M-F.19 | C.I.3 | dithianon |
| M-F.20 | C.I.4 | dithianon |
| M-F.21 | C.I.5 | dithianon |
| M-F.22 | C.I.6 | dithianon |
| M-F.23 | C.I.7 | dithianon |
| M-F.24 | C.I.8 | dithianon |
| M-F.25 | C.I.9 | dithianon |
| M-F.26 | C.I.10 | dithianon |
| M-F.27 | C.I.11 | dithianon |
| M-F.28 | C.I.12 | dithianon |
| M-F.29 | C.I.13 | dithianon |
| M-F.30 | C.I.14 | dithianon |
| M-F.31 | C.I.15 | dithianon |
| M-F.32 | C.I.16 | dithianon |

Pests and fungi

The mixtures of the present invention have excellent activity against a broad spectrum of phytopathogenic fungi and animal pests.

Animal pests

The mixtures of the present invention have excellent activity against a broad spectrum of animal pests. They are in particular suitable for efficiently controlling arthropodal pests such as arachnids, myriapedes and insects as well as nematodes.

In particular, they are suitable for controlling insect pests, such as insects from the order of

lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis;
beetles (Coleoptera), for example Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus and Sitophilus granaria;
flies, mosquitoes (Diptera), e.g. Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola, and Tabanus similis, Tipula oleracea, and Tipula paludosa;
thrips (Thysanoptera), e.g. Dichromothrips corbetti, Dichromothrips ssp., Frankliniella fusca, Frankliniella occidentalis, Frankliniella tritici, Scirtothrips citri, Thrips oryzae, Thrips palmi and Thrips tabaci,
termites (Isoptera), e.g. Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Termes natalensis, and Coptotermes formosanus;
cockroaches (Blattaria - Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis;
bugs, aphids, leafhoppers, whiteflies, scale insects, cicadas (Hemiptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus;

ants, bees, wasps, sawflies (Hymenoptera), e.g. Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Lasius niger, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp., Vespula squamosa, Paravespula vulgaris, Paravespula pennsylvanica, Paravespula germanica, Dolichovespula maculata, Vespa crabro, Polistes rubiginosa, Camponotus floridanus, and Linepithema humile;

crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina;

arachnoidea, such as arachnids (Acarina), e.g. of the families Argasidae, Ixodidae and Sarcoptidae, such as Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and Oligonychus pratensis; Araneida, e.g. Latrodectus mactans, and Loxosceles reclusa;

fleas (Siphonaptera), e.g. Ctenocephalides felis, Ctenocephalides canis, Xenopsylla cheopis, Pulex irritans, Tunga penetrans, and Nosopsyllus fasciatus,

silverfish, firebrat (Thysanura), e.g. Lepisma saccharina and Thermobia domestica,

centipedes (Chilopoda), e.g. Scutigera coleoptrata,

millipedes (Diplopoda), e.g. Narceus spp.,

Earwigs (Dermaptera), e.g. forficula auricularia,

lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and Solenopotes capillatus.

Collembola (springtails), e.g. Onychiurus ssp..

They are also suitable for controlling Nematodes : plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species; Sting nematodes, Belonolaimus longicaudatus and other Belonolaimus species; Pine nematodes, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus neglectus, Pratylenchus penetrans, Pratylenchus curvitatus, Pratylenchus goodeyi and other Pratylenchus species; Burrowing nematodes, Radopholus similis and other Radopholus species; Reniform nematodes, Rotylenchus robustus and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species; Dagger nematodes, Xiphinema species; and other plant parasitic nematode species.

They are also useful for controlling arachnids (Arachnoidea), such as acarians (Acarina), e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis.

Phytopathogenic fungi

The mixtures of the present invention have excellent activity against a broad spectrum of phytopathogenic fungi Ascomycetes, Basidiomycetes, Deuteromycetes and Peronosporomycetes (syn. Oomycetes). Some of them are systemically effective and can be employed in crop protection as foliar fungicides, as fungicides for seed dressing and as soil fungicides. They can also be used for treating seed.

They are particularly important in the control of a multitude of fungi on various cultivated plants, such as wheat, rye, barley, oats, rice, corn, lawns, bananas, cotton, soybean, coffee, sugar cane, grapevines, fruits and ornamental plants, and vegetables such as cucumbers, beans, tomatoes, potatoes and cucurbits, and on the seeds of these plants.

They are especially suitable for controlling the following plant diseases:

- Alternaria species on vegetables, oilseed rape, sugar beet and fruit and rice, for example, A. solani or A. alternata on potatoes and tomatoes;
- Aphanomyces species on sugar beet and vegetables;
- Ascochyta species on cereals and vegetables;
- Bipolaris and Drechslera species on corn, cereals, rice and lawns, for example, D. maydis on corn;
- Blumeria graminis (powdery mildew) on cereals;
- Botrytis cinerea (gray mold) on strawberries, vegetables, flowers and grapevines;
- Bremia lactucae on lettuce;
- Cercospora species on corn, soybeans, rice and sugar beet;
- Cochliobolus species on corn, cereals, rice, for example Cochliobolus sativus on cereals, Cochliobolus miyabeanus on rice;
- Colletotricum species on soybeans and cotton;
- Drechslera species, Pyrenophora species on corn, cereals, rice and lawns, for example, D. teres on barley or D. tritici-repentis on wheat;
- Esca on grapevines, caused by Phaeoacremonium chlamydosporium, Ph. Aleophilum and Formitipora punctata (syn. Phellinus punctatus);
- Exserohilum species on corn;
- Erysiphe cichoracearum and Sphaerotheca fuliginea on cucumbers;
- Fusarium and Verticillium species on various plants, for example, F graminearum or F. culmorum on cereals or F. oxysporum on a multitude of plants, such as, for example, tomatoes;
- Gaeumanomyces graminis on cereals;
- Gibberella species on cereals and rice (for example Gibberella fujikuroi on rice);
- Grainstaining complex on rice;
- Helminthosporium species on corn and rice;
- Michrodochium nivale on cereals;
- Mycosphaerella species on cereals, bananas and peanuts, for example, M. graminicola on wheat or M.fijiensis on bananas;
- Peronospora species on cabbage and bulbous plants, for example, P. brassicae on cabbage or P. destructor on onions;
- Phakopsara pachyrhizi and Phakopsara meibomiae on soybeans;
- Phomopsis species on soybeans and sunflowers;
- Phytophthora infestans on potatoes and tomatoes;
- Phytophthora species on various plants, for example, P. capsici on bell pepper;
- Plasmopara viticola on grapevines;
- Podosphaera leucotricha on apples;
- Pseudocercosporella herpotrichoides on cereals;
- Pseudoperonospora on various plants, for example, P. cubensis on cucumber or P. humili on hops;
- Puccinia species on various plants, for example, P. triticina, P. striformins, P. hordei or P.graminis on cereals or P. asparagi on asparagus;
- Pyricularia oryzae, Corticium sasakii, Sarocladium oryzae, S.attenuatum, Entyloma oryzae on rice;
- Pyricularia grisea on lawns and cereals;
- Pythium spp. on lawns, rice, corn, cotton, oilseed rape, sunflowers, sugar beet, vegetables and other plants, for example, P. ultiumum on various plants, P. aphanidermatum on lawns;

- Rhizoctonia species on cotton, rice, potatoes, lawns, corn, oilseed rape, sugar beet, vegetables and on various plants, for example, R. solani on beet and various plants;
- Rhynchosporium secalis on barley, rye and triticale;
- Sclerotinia species on oilseed rape and sunflowers;
- Septoria tritici and Stagonospora nodorum on wheat;
- Erysiphe (syn. Uncinula) necator on grapevines;
- Setospaeria species on corn and lawns;
- Sphacelotheca reilinia on corn;
- Thievaliopsis species on soybeans and cotton;
- Tilletia species on cereals;
- Ustilago species on cereals, corn and sugar cane, for example, U. maydis on corn;
- Venturia species (scab) on apples and pears, for example, V. inaequalis on apples.

The mixtures according to the invention are also suitable for controlling harmful fungi in the protection of materials (for example wood, paper, paint dispersions, fibers or fabrics) and in the protection of stored products. In the protection of wood, particular attention is paid to the following harmful fungi: Ascomycetes, such as Ophiostoma spp., Ceratocystis spp., Aureobasidium pullulans, Sclerophoma spp., Chaetomium spp., Humicola spp., Petriella spp., Trichurus spp.; Basidiomycetes, such as Coniophora spp., Coriolus spp., Gloeophyllum spp., Lentinus spp., Pleurotus spp., Poria spp., Serpula spp. and Tyromyces spp., Deuteromycetes, such as Aspergillus spp., Cladosporium spp., Penicillium spp., Trichoderma spp., Alternaria spp., Paecilomyces spp. and Zygomycetes, such as Mucor spp., additionally in the protection of materials the following yeasts: Candida spp. and Saccharomyces cerevisae.

Formulations

The pesticidal mixtures according to the present invention can be converted into the customary formulations, for example solutions, emulsions, suspensions, dusts, powders, pastes and granules. The use form depends on the particular intended purpose; in each case, it should ensure a fine and even distribution of the compounds according to the invention.

The formulations are prepared in a known manner (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, WileyVCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8), for example by extending the active com-pound with auxiliaries suitable for the formulation of agrochemicals, such as solvents and/or carriers, if desired emulsifiers, surfactants and dispersants, preservatives, antifoaming agents, anti-freezing agents, for seed treatment formulation also optionally gelling agents.

Examples of suitable solvents are water, aromatic solvents (for example Solvesso™ products, xylene), paraffins (for example mineral oil fractions), alcohols (for example methanol, butanol, pentanol, benzyl alcohol), ketones (for example cyclohexanone, gamma-butyrolactone), pyrrolidones (NMP(N-methyl-pyrrolidone), NOP (N-octyl-pyrrolidone)), acetates (glycol diacetate), glycols, fatty acid dimethylamides, fatty acids and fatty acid esters. In principle, solvent mixtures may also be used.

Suitable emulsifiers are nonionic and anionic emulsifiers (for example polyoxyethylene fatty alcohol ethers, alkylsulfonates and arylsulfonates).

Examples of dispersants are lignin-sulfite waste liquors and methylcellulose.

Suitable surfactants used are alkali metal, alkaline earth metal and ammonium salts of lignosulfonic acid, naphthalenesulfonic acid, phenolsulfonic acid, dibutylnaphthalene-sulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol ethylene oxide condensates, ethoxylated castor oil, polyoxyethylene alkyl ethers, ethoxylated polyoxypropyl-ene, lauryl alcohol polyglycol ether acetal, sorbitol esters, lignosulfite waste liquors and methylcellulose.

Substances, which are suitable for the preparation of directly sprayable solutions, emulsions, pastes or oil dispersions are mineral oil fractions of medium to high boiling point, such as kerosene or diesel oil, furthermore coal tar

oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, highly polar solvents, for example dimethyl sulfoxide, N-methylpyrrolidone or water.

Also anti-freezing agents such as glycerin, ethylene glycol, propylene glycol and bactericides such as can be added to the formulation.

Suitable antifoaming agents are for example antifoaming agents based on silicon or magnesium stearate.

A suitable preservative is e.g. dichlorophen.

An example of a gelling agent is carrageen (Satiagel®)

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers.

Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

In general, the formulations comprise from 0.01 to 95% by weight, preferably from 0.1 to 90% by weight, of the active compounds. In this case, the active compounds are employed in a purity of from 90% to 100% by weight, preferably 95% to 100% by weight (according to NMR spectrum or HLPC spectrum).

For seed treatment purposes, respective formulations can be diluted 2-10 fold leading to concentrations in the ready to use preparations of 0,01 to 60% by weight active compounds by weight, preferably 0,1 to 40% by weight.

The mixtures of the present invention can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; they are intended to ensure in each case the finest possible distribution of the active compounds according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. However, it is also possible to prepare concentrates composed of active substance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.01 to 1% per weight.

The active compound(s) may also be used successfully in the ultra-low-volume process (ULV), it being possible to apply formulations comprising over 95% by weight of active compound, or even to apply the active compound without additives.

The following are examples of formulations:

1. Products for dilution with water for foliar applications. For seed treatment purposes, such products may be applied to the seed diluted or undiluted.

A) Water-soluble concentrates (SL, LS)

10 parts by weight of the active compound(s) are dissolved in 90 parts by weight of water or a water-soluble solvent. As an alternative, wetters or other auxiliaries are added. The active compound(s) dissolve(s) upon dilution with water, whereby a formulation with 10 % (w/w) of active compound(s) is obtained.

B) Dispersible concentrates (DC)

20 parts by weight of the active compound(s) are dissolved in 70 parts by weight of cyclohexanone with addition of 10 parts by weight of a dispersant, for example polyvinylpyrrolidone. Dilution with water gives a dispersion, whereby a formulation with 20% (w/w) of active compound(s) is obtained.

C) Emulsifiable concentrates (EC)

15 parts by weight of the active compound(s) are dissolved in 7 parts by weight of xylene with addition of calcium

dodecylbenzenesulfonate and castor oil ethoxylate (in each case 5 parts by weight). Dilution with water gives an emulsion, whereby a formulation with 15% (w/w) of active compound(s) is obtained.

D) Emulsions (EW, EO, ES)

25 parts by weight of the active compound(s) are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion. Dilution with water gives an emulsion, whereby a formulation with 25% (w/w) of active compound(s) is obtained.

E) Suspensions (SC, OD, FS)

In an agitated ball mill, 20 parts by weight of the active compound(s) are comminuted with addition of 10 parts by weight of dispersants, wetters and 70 parts by weight of water or of an organic solvent to give a fine active compound(s) suspension. Dilution with water gives a stable suspension of the active compound(s), whereby a formulation with 20% (w/w) of active compound(s) is obtained.

F) Water-dispersible granules and water-soluble granules (WG, SG)

50 parts by weight of the active compound(s) are ground finely with addition of 50 parts by weight of dispersants and wetters and made as water-dispersible or water-soluble granules by means of technical appliances (for example extrusion, spray tower, fluidized bed). Dilution with water gives a stable dispersion or solution of the active compound(s), whereby a formulation with 50% (w/w) of active compound(s) is obtained.

G) Water-dispersible powders and water-soluble powders (WP, SP, SS, WS)

75 parts by weight of the active compound(s) are ground in a rotor-stator mill with addition of 25 parts by weight of dispersants, wetters and silica gel. Dilution with water gives a stable dispersion or solution of the active compound(s), whereby a formulation with 75% (w/w) of active compound(s) is obtained.

H) Gel-Formulation (GF)

In an agitated ball mill, 20 parts by weight of the active compound(s) are comminuted with addition of 10 parts by weight of dispersants, 1 part by weight of gelling agent wetters and 70 parts by weight of water or of an organic solvent to give a fine active compound(s) suspension. Dilution with water gives a stable suspension of the active compound(s), whereby a formulation with 20% (w/w) of active compound(s) is obtained.

2. Products to be applied undiluted for foliar applications. For seed treatment purposes, such products may be applied to the seed diluted or undiluted.

I) Dustable powders (DP, DS)

5 parts by weight of the active compound(s) are ground finely and mixed intimately with 95 parts by weight of finely divided kaolin. This gives a dustable product having 5% (w/w) of active compound(s).

J) Granules (GR, FG, GG, MG)

0.5 part by weight of the active compound(s) is ground finely and associated with 95.5 parts by weight of carriers, whereby a formulation with 0.5% (w/w) of active compound(s) is obtained. Current methods are extrusion, spray-drying or the fluidized bed. This gives granules to be applied undiluted for foliar use.

K) ULV solutions (UL)

10 parts by weight of the active compound(s) are dissolved in 90 parts by weight of an organic solvent, for example xylene. This gives a product having 10% (w/w) of active compound(s), which is applied undiluted for foliar use.

Various types of oils, wetters, adjuvants or bactericides may be added to the active ingredients. Suitable adjuvants in this context are, in particular: organically modified polysiloxanes, e.g. Break Thru S 240™; alcohol alkoxylates, e.g. Atplus 245™, Atplus MBA 1303™, Plurafac LF 300™ and Lutensol ON 30™; EO/PO block polymers, e.g.

Pluronic RPE 2035™ and Genapol B™; alcohol ethoxylates, e.g. Lutensol XP 80™; and sodium dioctylsulfosuccinate, e.g. Leophen RA™.

Compositions of this invention may further contain other active ingredients than those listed above. For example further insecticides or fungicides, herbicides, fertilizers such as ammonium nitrate, urea, potash, and superphosphate, phytotoxicants and plant growth regulators and safeners. These agents usually are admixed with the agents according to the invention in a weight ratio of 1:10 to 10:1.

The pesticidal mixtures may comprise additionally one or more further insecticidal compound III of the following list M of pesticides. The list is intended to illustrate the possible combinations, but not to impose any limitation:

M.1. Organo(thio)phosphates: acephate, azamethiphos, azinphos-ethyl, azinphosmethyl, chlorethoxyfos, chlorfenvinphos, chlormephos, chlorpyrifos, chlorpyrifosmethyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;

M.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;

M.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;

M.4. Juvenile hormone mimics: hydroprene, kinoprene, methoprene, fenoxycarb, pyriproxyfen;

M.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), thiacloprid, thiocyclam, thiosultap-sodium and AKD1022.

M.6. GABA gated chloride channel antagonist compounds: chlordane, endosulfan, gamma-HCH (lindane); acetoprole, ethiprole, fipronil, pyrafluprole, pyriprole, vaniliprole, the phenylpyrazole compound of formula $M^{6.1}$

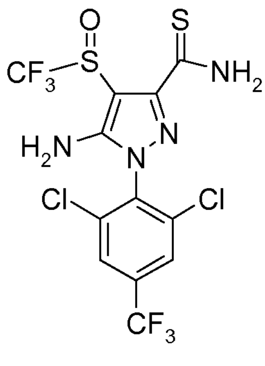

($M^{6.1}$)

,

M.7. Chloride channel activators: abamectin, emamectin benzoate, milbemectin, lepimectin;

M.8. METI I compounds: fenazaquin, fenpyroximate, pyrimidifen, pyridaben, tebufenpyrad, tolfenpyrad, flufenerim, rotenone;

M.9. METI II and III compounds: acequinocyl, fluacyprim, hydramethylnon;

M.10. Uncouplers of oxidative phosphorylation: chlorfenapyr, DNOC;

M.11. Inhibitors of oxidative phosphorylation: azocyclotin, cyhexatin, diafenthiuron, fenbutatin oxide, propargite, tetradifon;

M.12. Moulting disruptors: cyromazine, chromafenozide, halofenozide, methoxyfenozide, tebufenozide;

M.13. Synergists: piperonyl butoxide, tribufos;

M.14. Sodium channel blocker compounds: indoxacarb, metaflumizone;

M.15. Fumigants: methyl bromide, chloropicrin sulfuryl fluoride;

M.16. Selective feeding blockers: crylotie, pymetrozine, flonicamid;

M.17. Mite growth inhibitors: clofentezine, hexythiazox, etoxazole;

M.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;

M.19. Lipid biosynthesis inhibitors: spirodiclofen, spiromesifen, spirotetramat;

M.20. octapaminergic agonsits: amitraz;

M.21. ryanodine receptor modulators: flubendiamide;

M.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic; pyrimidinyl alkynylether compounds $M^{22.1}$ or thiadiazolyl alkynylether compounds $M^{22.2}$:

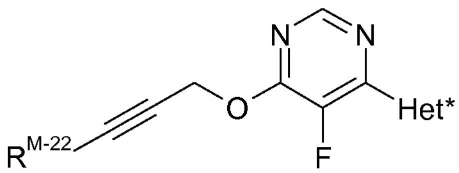 $M^{22.1}$ 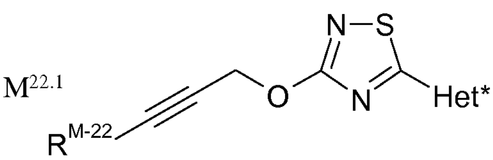 $M^{22.2}$

wherein $R^{M-22}$ is methyl or ethyl and Het* is 3,3-dimethylpyrrolidin-1-yl, 3-methylpiperidin-1-yl, 3,5-dimethylpiperidin-1-yl, 3-trifluormethylpiperidin-1-yl, hexahydroazepin-1-yl, 2,6-dimethylhexahydroazepin-1-yl or 2,6-dimethylmorpholin-4-yl.

M.23. N-R'-2,2-dihalo-1-R"cyclo-propanecarboxamide-2-(2,6-dichloro- α,α,α -tri-fluoro-p-tolyl)hydrazone or N-R'-2,2-di(R"')propionamide-2-(2,6-dichloro- α,α,α -trifluoro-p-tolyl)-hydrazone, wherein R' is methyl or ethyl, halo is chloro or bromo, R" is hydrogen or methyl and R"' is methyl or ethyl;

M.24. Anthranilamides: chloranthraniliprole, the compound of formula $M^{24}$ 1

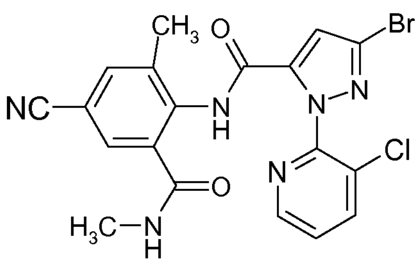 ($M^{24.1}$)

;

M.25. Malononitrile compounds: $CF_3(CH_2)_2C(CN)_2CH_2(CF_2)_3CF_2H$, $CF_3(CH_2)_2C(CN)_2CH_2(CF_2)_5CF_2H$,

$CF_3(CH_2)_2C(CN)_2(CH_2)_2C(CF_3)_2F$, $CF_3(CH_2)_2C(CN)_2(CH_2)_2(CF_2)_3CF_3$, $CF_2H(CF_2)_3CH_2C(CN)_2CH_2(CF_2)_3CF_2H$, $CF_3(CH_2)_2C(CN)_2CH_2(CF_2)_3CF_3$, $CF_3(CF_2)_2CH_2C(CN)_2CH_2(CF_2)_3CF_2H$, $CF_3CF_2CH_2C(CN)_2CH_2(CF_2)_3CF_2H$, 2-(2,2,3,3,4,4,5,5-octafluoropentyl)-2-(3,3,4,4,4-pentafluorobutyl)-malonodinitrile, and $CF_2HCF_2CF_2CF_2CH_2C(CN)_2CH_2CH_2CF_2CF_3$;

M.26. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis;

The commercially available compounds of the group M may be found in The Pesticide Manual, 13th Edition, British Crop Protection Council (2003) among other publications.

Thioamides of formula $M^{6.1}$ and their preparation have been described in WO 98/28279. Lepimectin is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. AKD 1022 and its preparation have been described in US 6300348. Chloranthraniliprole has been described in WO 01/70671, WO 03/015519 and WO 05/118552. Anthranilamide derivatives of formula $M^{24.1}$ have been described in WO 01/70671, WO 04/067528 and WO 05/118552. Cyflumetofen and its preparation have been described in WO 04/080180. The aminoquinazolinone compound pyrifluquinazon has been described in EP A 109 7932. The alkynylether compounds $M^{22.1}$ and $M^{22.2}$ are described e.g. in JP 2006131529. The malononitrile compounds $CF_3(CH_2)_2C(CN)_2CH_2(CF_2)_3CF_2H$, $CF_3(CH_2)_2C(CN)_2CH_2(CF_2)_5CF_2H$, $CF_3(CH_2)_2C(CN)_2(CH_2)_2C(CF_3)_2F$, $CF_3(CH_2)_2C(CN)_2(CH_2)_2(CF_2)_3CF_3$, $CF_2H(CF_2)_3CH_2C(CN)_2CH_2(CF_2)_3CF_2H$, $CF_3(CH_2)_2C(CN)_2CH_2(CF_2)_3CF_3$, $CF_3(CF_2)_2CH_2C(CN)_2CH_2(CF_2)_3CF_2H$, $CF_3CF_2CH_2C(CN)_2CH_2(CF_2)_3CF_2H$, 2-(2,2,3,3,4,4,5,5-octafluoropentyl)-2-(3,3,4,4,4-pentafluorobutyl)-malonodinitrile, and $CF_2HCF_2CF_2CF_2CH_2C(CN)_2CH_2CH_2CF_2CF_3$ have been described in WO 05/63694. Those additional ingredients may be used sequentially or in combination with the above-described compositions, if appropriate also added only immediately prior to use (tank mix). For example, the plant(s) may be sprayed with a composition of this invention either before or after being treated with other active ingredients.

Applications

The one or more active compound(s) I and the one or more active compound(s) II can be applied according to different ways of applications, which are

I. simultaneously, that is

a) jointly (i.e. as mixture as such, e.g. a ready-to-use-formulation, or as tank mix) or
b) separately (i.e. application via separate tanks), or

II. in succession separately, the sequence, in this case, generally not having any effect on the result of the control measures.

Therefore, the method for controlling harmful fungi and animal pests is carried out by the separate or joint application of at least one active compound I and at least one of the active compound II, or a mixture of at least one active compounds I and at least one of the active compound II, by spraying or dusting the seeds, the plants or the soils before or after sowing of the plants or before or after emergence of the plants.

The inventive mixtures or compositions of these mixtures can also be employed for protecting plants from attack or infestation by insects, acarids or nematodes comprising contacting a plant, or soil or water in which the plant is growing.

In the context of the present invention, the term plant refers to an entire plant, a part of the plant or the propagation material of the plant, that is, the seed or the seedling.

Plants which can be treated with the inventive mixtures include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

Some of the inventive mixtures have systemic action and can therefore be used for the protection of the plant

shoot against foliar pests as well as for the treatment of the seed and roots against soil pests.

The mixtures of compounds I and II or their corresponding formulations are applied by treating the harmful fungi and the animal pests, their habitat or the plants, seeds, soils, areas, materials or spaces to be kept free from them with a pesticidally effective amount of the mixture or, in the case of separate application, of the compounds I and II. Application can be before or after the infection by harmful fungi and/or animal pests.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

Preferred application methods are into water bodies, via soil, cracks and crevices, pastures, manure piles, sewers, into water, on floor, wall, or by perimeter spray application and bait.

Usually, mixtures of at least one compound I and at least one active compound II are employed. However, mixtures of at least one compound I with two or, if desired, more active components may also offer particular advantages.

Suitable further active components in the above sense are particularly the active compounds II mentioned at the outset and in particular the preferred active compounds II mentioned above.

The inventive mixtures and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

In the case of soil treatment or of application to the pests dwelling place or nest, the quantity of active ingredient(s) ranges from 0.0001 to 500 g per 100 $m^2$, preferably from 0.001 to 20 g per 100 $m^2$.

Customary application rates in the protection of materials are, for example, from 0.01 g to 1000 g of active compound(s) per $m^2$ treated material, desirably from 0.1 g to 50 g per $m^2$.

Pesticidal compositions for use in the impregnation of materials typically contain from 0.001 to 95 weight %, preferably from 0.1 to 45 weight %, and more preferably from 1 to 25 weight % of at least one repellent and / or insecticide.

For use in spray compositions, the content of the mixture of the active ingredients is from 0.001 to 80 weights %, preferably from 0.01 to 50 weight % and most preferably from 0.01 to 15 weight %.

In general, "synergistically effective amount" means that the one or more active compound(s) I and the one or more active compound(s) II are usually applied in a weight ratio of from 500:1 to 1:100, preferably from 20:1 to 1:50, in particular from 5:1 to 1:20. Depending on the nature of the compounds the employed weight ratio of compound(s) I and compound(s) II ranges can start from 100:1 to 1:100, preferably from 20:1 to 1:20, in particular from 10:1 to 1:10.

Further active copmpounds are, if desired, mixed in a ratio of from 20:1 to 1:20 to the compound I.

Depending on the desired effect, the application rates of the mixtures according to the invention are from 5 g/ha to 2000 g/ha, preferably from 20 to 1500 g/ha, more preferably from 50 to 1000 g/ha and in particular from 50 to 750 g/ha.

For use in treating crop plants, the rate of application of the mixture of the active ingredients of this invention may be in the range of 0.1 g to 4000 g per hectare, desirably from 25 g to 600 g per hectare, more desirably from 50 g to 500 g per hectare.

Correspondingly, the application rates for the compound(s) I are generally from 1 to 1000 g/ha, preferably from 10 to 900 g/ha, in particular from 20 to 750 g/ha.

Correspondingly, the application rates for the active compound II are generally from 1 to 2000 g/ha, preferably from 10 to 1500 g/ha, in particular from 40 to 1000 g/ha.

Methods to control infectious diseases transmitted by insects (e.g. malaria, dengue and yellow fever, lymphatic filariasis, and leishmaniasis) with the inventive mixtures and their respective compositions also comprise treating surfaces of huts and houses, air spraying and impregnation of curtains, tents, clothing items, bed nets, tsetse-fly trap or the like. Insecticidal compositions for application to fibers, fabric, knitgoods, nonwovens, netting material or foils and tarpaulins preferably comprise a composition including the inventive mixtures, optionally a repellent and at least one binder.

Bait formulations and applications

The mixtures according to the invention can be applied to any and all developmental stages, such as egg, larva, pupa, and adult. The pests may be controlled by contacting the target pest, its food supply, habitat, breeding ground or its locus with a pesticidally effective amount of the inventive mixtures or of compositions comprising the mixtures.

"Locus" in general means a plant, seed, soil, area, material or environment in which pests or fungi are growing or may grow.

The mixtures according to the invention are effective through both contact and ingestion.

The inventive mixtures are effective through both contact (via soil, glass, wall, bed net, carpet, plant parts or animal parts), and ingestion (bait, or plant part) and through trophallaxis and transfer.

According to another preferred embodiment of the invention, for use against non crop pests such as ants, termites, wasps, flies, mosquitoes, crickets, locusts, or cockroaches the inventive mixtures are prepared into a bait preparation.

The bait can be a liquid, a solid or a semisolid preparation (e.g. a gel). The bait employed in the composition is a product which is sufficiently attractive to incite insects such as ants, termites, wasps, flies, mosquitoes, crickets etc. or cockroaches to eat it. This attractant may be chosen from feeding stimulants or para and / or sex pheromones readily known in the art.

For use in bait compositions, the typical content of active ingredient(s) is from 0.0001 weight % to 15 weight %, desirably from 0.001 weight % to 5% weight % of active compound. The composition used may also comprise other additives such as a solvent of the active material, a flavoring agent, a preserving agent, a dye or a bitter agent. Its attractiveness may also be enhanced by a special color, shape or texture.

According to a preferred embodiment of the invention, the mixtures according to the present invention are employed via soil application. Soil application is especially favorable for use against ants, termites, crickets, or cockroaches.

According to another preferred embodiment of the invention, for use against non crop pests such as ants, termites, wasps, flies, mosquitoes, crickets, locusts, or cockroaches the mixtures according to the present invention are prepared into a bait preparation.

Seed Treatment

The mixtures according to the present invention are also suitable for the treatment of seeds in order to protect the seed from harmful fungi and animal pests, in particular from soil-living fungi and insect pests and the resulting plant’s roots and shoots against soil pests and foliar insects.
The protection of the resulting plant’s roots and shoots is preferred.

The present invention therefore comprises therefore a method for the protection of seeds from insects, in particular from soil pests and of the seedlings’ roots and shoots from harmfulo fungi and insects, in particular from soil and foliar insects, said method comprising contacting the seeds before sowing and/or after pregermination with mixtures according to the present invention.
Particularly preferred is a method, wherein the plant’s roots and shoots are protected.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds.

The term seed treatment comprises all suitable seed treatment techniques known in the art, such as seed dressing, seed coating, seed dusting, seed soaking and seed pelleting.

The present invention also comprises seeds coated with or containing the active compounds. The term "coated with and/or containing" generally signifies that the active ingredients are for the most part on the surface of the propagation product at the time of application, although a greater or lesser part of the ingredient may penetrate into the propagation product, depending on the method of application. When the said propagation product are (re)planted, it may absorb the active ingredient.

Suitable seeds are seeds of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens.

In addition, the mixtures according to the invention may also be used for the treatment seeds from plants, which tolerate the action of herbicides or fungicides or insecticides owing to breeding, including genetic engineering methods.

For example, the active mixtures can be employed in treatment of seeds from plants, which are resistant to herbicides from the group consisting of the sulfonylureas, imidazolinones, glufosinate-ammonium or glyphosate-isopropylammonium and analogous active substances (see for example, EP-A-0242236, EP-A-242246) (WO 92/00377) (EP-A-0257993, U.S. Pat. No. 5,013,659) or in transgenic crop plants, for example cotton, with the capability of producing Bacillus thuringiensis toxins (Bt toxins) which make the plants resistant to certain pests (EP-A-0142924, EP-A-0193259),

Furthermore, the mixtures according to the present invention can be used also for the treatment of seeds from plants, which have modified characteristics in comparison with existing plants consist, which can be generated for example by traditional breeding methods and/or the generation of mutants, or by recombinant procedures). For example,

a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The seed treatment application of the mixtures is carried out by spraying or by dusting the seeds before sowing of the plants and before emergence of the plants.

In the treatment of seeds the corresponding formulations are applied by treating the seeds with an effective amount of the mixture according to the present invention. Herein, the application rates of the active compound(s) are generally from 0,1 g to 10 kg per 100 kg of seed, preferably from 1 g to 5 kg per 100 kg of seed, in particular from 1 g to 2,5 kg per 100 kg of seed. For specific crops such as lettuce the rate can be higher.

Compositions, which are especially useful for seed treatment are e.g.:

A Soluble concentrates (SL, LS)
D Emulsions (EW, EO, ES)
E Suspensions (SC, OD, FS)
F Water-dispersible granules and water-soluble granules (WG, SG)
G Water-dispersible powders and water-soluble powders (WP, SP, WS)
H Gel-Formulations (GF)
I Dustable powders (DP, DS)

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulations can be applied to the seed diluted or undiluted. Application to the seeds is carried out before sowing, either directly on the seeds or after having pregerminated the latter

In a preferred embodiment a FS formulation is used for seed treatment. Typcially, a FS formulation may comprise 1-800 g/l of active ingredient(s), 1-200 g/l Surfactant, 0 to 200 g/l antifreezing agent, 0 to 400 g/l of binder, 0 to 200 g/l of a pigment and up to 1 liter of a solvent, preferably water.

Preferred FS formulations of the active compounds for seed treatment usually comprise from 0.1 to 80% by weight (1 to 800 g/l) of the active ingredient(s), from 0.1 to 20 % by weight (1 to 200 g/l) of at least one surfactant, e.g. 0.05 to 5 % by weight of a wetter and from 0.5 to 15 % by weight of a dispersing agent, up to 20 % by weight, e.g. from 5 to 20 % of an anti-freeze agent, from 0 to 15 % by weight, e.g. 1 to 15 % by weight of a pigment and/or a dye, from 0 to 40 % by weight, e.g. 1 to 40 % by weight of a binder (sticker /adhesion agent), optionally up to 5 % by weight, e.g. from 0.1 to 5 % by weight of a thickener, optionally from 0.1 to 2 % of an anti-foam agent, and optionally a preservative such as a biocide, antioxidant or the like, e.g. in an amount from 0.01 to 1 % by weight and a filler/vehicle up to 100 % by weight.

Seed Treatment formulations may additionally also comprise binders and optionally colorants.

Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

The invention also relates to seed comprising mixtures according to the present invention. The amount of the compound I or the agriculturally useful salt thereof will in general vary from 0.1 g to 10 kg per 100 kg of seed, preferably from 1 g to 5 kg per 100 kg of seed, more preferably from 1 g to 1000 g per 100 kg of seeds, most preferably from 1 g to 750 g per 100 kg of seeds, and in particular from 5 g to 500 g per 100 kg of seed.

Biology

B.1 Fungicidal action

The fungicidal effect of the compound and the mixtures can be demonstrated by the following tests:

The active compounds, separately or jointly, are prepared as a stock solution comprising 0.25% by weight of active compounds in acetone or DMSO. 1 % by weight of the emulsifier Uniperol® EL (wetting agent having emulsifying

and dispersant action based on ethoxylated alkylphenols) is added to this solution, and the mixture is diluted with water to the desired concentration.

The visually determined percentages of infected leaf areas are converted into efficacies in % of the untreated control:

The efficacy (E) is calculated as follows using Abbot's formula:

$$E = (1 - \alpha/\beta\ ) \cdot 100$$

α corresponds to the fungicidal infection of the treated plants in % and

β corresponds to the fungicidal infection of the untreated (control) plants in %

An efficacy of 0 means that the infection level of the treated plants corresponds to that of the untreated control plants; an efficacy of 100 means that the treated plants are not infected.

The expected efficacies of mixtures of active compounds is determined using Colby's formula (Colby, S.R. "Calculating synergistic and antagonistic responses of herbicide Combinations", Weeds, 15, 20-22, 1967) and compared with the observed efficacies.

Colby's formula:

$$E = x + y - x \cdot y/100$$

E expected efficacy, expressed in % of the untreated control, when using the mixture of the active compounds A and B at the concentrations a and b

x efficacy, expressed in % of the untreated control, when using the active compound A at the concentration a

y efficacy, expressed in % of the untreated control, when using the active compound B at the concentration b

Example B.1 a Fungicidal control of brown spot caused by Cochliobolus miyabeanus (protective)

Leaves of pot-grown rice seedlings are sprayed to run-off with an aqueous suspension containing a certain concentration of active ingredients prepared from a stock solution. The plants are allowed to air-dry. At the following day the plants are inoculated with an aqueous spore suspension of Cochliobolus miyabeanus. Then the trial plants are immediately transferred to a humid chamber. After 6 days at 22-24°C and a relative humidity close to 100 % the extent of fungal attack on the leaves is visually assessed as % diseased leaf area.

B.2. Action against animal pests

The following tests can demonstrate the control efficacy of compounds, mixtures or compositions of this invention on specific pests. However, the pest control protection afforded by the mixtures is not limited to these species. In certain instances, combinations of a compound of this invention with other invertebrate pest control compounds or agents are found to exhibit synergistic effects against certain important invertebrate pests.

The analysis of synergism of the mixtures is determined using Colby's equation.

Example B.2a Insecticidal control of vetch aphid (Megoura viciae)

For evaluating control of vetch aphid (Megoura viciae) through contact or systemic means the test unit consists of 24-well-microtiter plates containing broad bean leaf disks.

The mixtures are formulated using a solution containing 75 wt% water and 25 wt% DMSO. Different concentrations of formulated mixtures are sprayed onto the leaf disks at 2.5μl, using a custom built micro atomizer at two replications.

For experimental mixtures in these tests identical volumes of both mixing partners at the desired concentrations respectively are mixed together.

After application, the leaf disks are air-dried and 5 - 8 adult aphids placed on the leaf disks inside the microtiter plate wells. The aphids are then allowed to suck on the treated leaf disks and are incubated at 23 ± 1°C, 50 ± 5 % room humidity for 5 days. Aphid mortality and fecundity is then visually assessed.

Example B.2b Insecticidal control of boll weevil (Anthonomus grandis)

For evaluating control of boll weevil (Anthonomus grandis) the test unit consists of 24-well-microtiter plates containing an insect diet and 20-30 A. grandis eggs.
The mixtures are formulated using a solution containing 75 wt% water and 25 wt% DMSO. Different concentrations of formulated mixtures are sprayed onto the insect diet at 20μl, using a custom built micro atomizer at two replications.
For experimental mixtures in these tests identical volumes of both mixing partners at the desired concentrations respectively are mixed together.
After application the microtiter plates are incubated at 23 ± 1°C, 50 ± 5 % room humidity for 5 days. Egg and larval mortality is then visually assessed.

Example B.2c Insecticidal control of Mediterranean fruitfly (Ceratitis capitata)

For evaluating control of Mediterranean fruitfly (Ceratitis capitata) the test unit consists of 96-well-microtiter plates containing an insect diet and 50-80 C. capitata eggs.
The mixtures are formulated using a solution containing 75 wt% water and 25 wt% DMSO. Different concentrations of formulated mixtures are sprayed onto the insect diet at 5μl, using a custom built micro atomizer at two replications.
For experimental mixtures in these tests identical volumes of both mixing partners at the desired concentrations respectively, are mixed together.
After application, microtiter plates are incubated at 28 ± 1°C, 80 ± 5 % room humidity for 5 days. Egg and larval mortality is then visually assessed.

Example B.2d Insecticidal control of tobacco budworm (Heliothis virescens)

For evaluating control of tobacco budworm (Heliothis virescens) the test unit consists of 96-well-microtiter plates containing an insect diet and 15-25 H. virescens eggs.
The mixtures are formulated using a solution containing 75 wt% water and 25 wt% DMSO. Different concentrations of formulated mixtures are sprayed onto the insect diet at 10μl, using a custom built micro atomizer at two replications.
For experimental mixtures in these tests identical volumes of both mixing partners at the desired concentrations respectively are mixed together.
After application, microtiter plates were incubated at 28 ± 1°C, 80 ± 5 % room humidity for 5 days. Egg and larval mortality was then visually assessed.

Synergism is demonstrated, when the activity of the mixtures according to the invention is considerably higher than predicted using Colby's formula.

Following compounds C of the invention were tested with different products (as mixing partners) as listed below:

Compound C.I.5

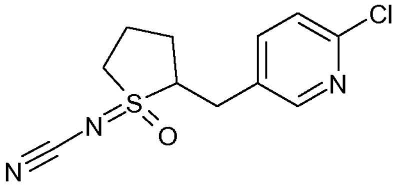

Compound C.I.10

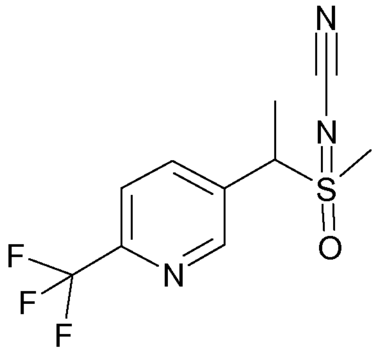

Compound C.I.2

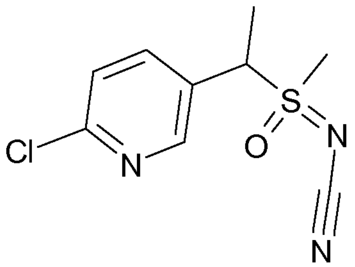

Mixing product: benthiavalicarb, cymoxanil, dithianon, epoxiconazole, fluxastrobin, picoxystrobin, quinoxyfen and tebuconazole.

The active compounds were formulated separately as a stock solution having a concentration of 10000 ppm in dimethyl sulfoxide. The stock solutions were mixed according to the given ratio, pipetted onto a micro titer plate (MTP) and diluted with water to the stated concentrations. A spore suspension of the pathogen to be treated was then added and after 7 days of inoculation, the MTP was measured using an absorption photometer. The measured parameters were compared to the growth of the active compound-free control variant (100%) and the fungus-free and active compound-free blank value to determine the relative growth in % of the pathogens in the respective active compounds. The visually determined percentages of infected leaf areas were converted into efficacies in % of the untreated control.
Test 1. Activity against the grey mold Botrytis cinerea in the microtiterplate test (Botrci)
The stock solutions were mixed according to the ratio, pipetted onto a micro titer plate (MTP) and diluted with water to the stated concentrations. A spore suspension of Botrci cinerea in an aqueous biomalt solution was then added. The plates were placed in a water vapor-saturated chamber at a temperature of 18°C. Using an absorption photometer, the MTPs were measured at 405 nm 7 days after the inoculation.
The results for the tested mixtures are listed in table 1

Table 1: Botrci

| Active compound / active mixture | Concentration (ppm) | Mixture | Observed efficacy | Expected efficacy according to Colby (%) | Synergism (%) |
|---|---|---|---|---|---|
| C.I.2 | 63<br>16 | | 0<br>0 | | |
| C.I.5 | 16 | | 0 | | |
| C.I.10 | 4 | | 3 | | |
| Cymoxanil | 63 | | 17 | | |
| Dithianon | 0.25 | | 12 | | |
| Epoxiconazol | 0.063 | | 3 | | |
| C.I.2 Cymoxanil | 63<br>63 | 1 : 1 | 100 | 17 | 83 |

(continued)

| Active compound / active mixture | Concentration (ppm) | Mixture | Observed efficacy | Expected efficacy according to Colby (%) | Synergism (%) |
|---|---|---|---|---|---|
| C.I.2 Dithianon | 16<br>0.25 | 64 : 1 | 99 | 12 | 87 |
| C.I.5 Epoxiconazol | 16<br>0.25 | 64 : 1 | 49 | 12 | 37 |
| C.I.10 Epoxiconazol | 4<br>0.063 | 64 : 1 | 30 | 6 | 24 |

2. Activity against the late blight pathogen Phytophthora infestans in the microtiter test (Phytin)

The stock solutions were mixed according to the ratio, pipetted onto a micro titer plate (MTP) and diluted with water to the stated concentrations. A spore suspension of Phytophtora infestans containing a pea juice-based aqueous nutrient medium was then added. The plates were placed in a water vapor-saturated chamber at a temperature of 18°C. Using an absorption photometer, the MTPs were measured at 405 nm 7 days after the inoculation.
The results for the tested mixtures are listed in table 2

Table 2: Phytin

| Active compound / active mixture | Concentration (ppm) | Mixture | Observed efficacy | Expected efficacy according to Colby (%) | Synergism (%) |
|---|---|---|---|---|---|
| C.I2 | 0.25 | | 0 | | |
| C.I.5 | 1 | | 0 | | |
| C.I.10 | 1 | | 0 | | |
| Cymoxanil | 0.25 | | 32 | | |
| Benthivalicarb | 0.063 | | 65 | | |
| C.I.2 Cymoxanil | 0.25<br>0.25 | 1 : 1 | 55 | 32 | 23 |
| C.I.5 Benthivalicarb | 1<br>0.063 | 16 : 1 | 94 | 65 | 29 |
| C.I.10 Benthivalicarb | 1<br>0.063 | 16 : 1 | 92 | 65 | 27 |

3. Activity against rice blast Pyricularia oryzae in the microtiterplate test (Pyrior)

The stock solutions were mixed according to the ratio, pipetted onto a micro titer plate (MTP) and diluted with water to the stated concentrations. A spore suspension of Pyricularia oryzae in an aqueous biomalt solution was then added. The plates were placed in a water vapor-saturated chamber at a temperature of 18°C. Using an absorption photometer, the MTPs were measured at 405 nm 7 days after the inoculation.
The results for the tested mixtures are listed in table 3

Table 3: Pyrior

| Active compound / active mixture | Concentration (ppm) | Mixture | Observed efficacy | Expected efficacy according to Colby (%) | Synergism (%) |
|---|---|---|---|---|---|
| C.I.2 | 63<br>16 | | 3<br>6 | | |
| C.I.5 | 16 | | 3 | | |
| Cymoxanil | 63 | | 8 | | |

(continued)

| Active compound / active mixture | Concentration (ppm) | Mixture | Observed efficacy | Expected efficacy according to Colby (%) | Synergism (%) |
|---|---|---|---|---|---|
| Quinoxyfen | 16 | | 4 | | |
| C.I.2 Cymoxanil | 63<br>63 | 1 : 1 | 100 | 10 | 90 |
| C.I.2 Quinoxyfen | 16<br>16 | 1 : 1 | 100 | 9 | 91 |
| C.I.5 Quinoxyfen | 16<br>16 | 1 : 1 | 100 | 6 | 94 |

4. Activity against leaf blotch on wheat caused by Septoria tritici (Septtr)

The stock solutions were mixed according to the ratio, pipetted onto a micro titer plate (MTP) and diluted with water to the stated concentrations. A spore suspension of Septoria tritici in an aqueous biomalt solution was then added. The plates were placed in a water vapor-saturated chamber at a temperature of 18°C. Using an absorption photometer, the MTPs were measured at 405 nm 7 days after the inoculation.
The results for the tested mixtures are listed in table 4

Table 4: Septtr

| Active compound / active mixture | Concentration (ppm) | Mixture | Observed efficacy | Expected efficacy according to Colby (%) | Synergism (%) |
|---|---|---|---|---|---|
| C.I.5 | 4<br>0.25 | | 2<br>0 | | |
| C.I.10 | 4<br>1 | | 2<br>0 | | |
| Epoxiconazol | 0.063 | | 68 | | |
| Fluoxastrobin | 0.016 | | 15 | | |
| Picoxystrobin | 0.063 | | 63 | | |
| Tebuconazol | 0.25 | | 67 | | |
| C.I.5 Fluoxastrobin | 0.25<br>0.016 | 16 : 1 | 89 | 15 | 74 |
| C.I.5 Picoxystrobin | 4<br>0.063 | 64 : 1 | 84 | 64 | 20 |
| C.I.10 Epoxiconazol | 4<br>0.063 | 64 : 1 | 93 | 68 | 25 |
| C.I.10 Picoxystrobin | 4<br>0.063 | 64 : 1 | 84 | 64 | 20 |
| C.I.10 Tebuconazol | 1<br>0.25 | 4:1 1 | 89 | 67 | 22 |

## Claims

**1.** A pesticidal mixture comprising at least two active compounds, wherein:

1) at least one active compound I is a cyanosulfoximine compound of the formula (I)

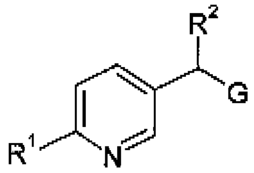

formula (I)

wherein

G is selected from

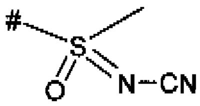

($G^1$) or

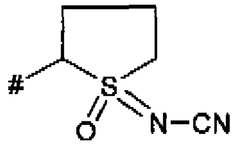

($G^2$)

and wherein # denotes the bonding in formula I;
$R^1$ is Cl or $CF_3$
and
$R^2$ is selected from hydrogen, chloro, $CH_3$ or $C_2H_5$;

or an enantiomers or a diastereomer thereof, pure or as mixtures of these enantiomers and/or diastereomers and
2) at least one active compound II is a fungicidal compound selected from: epoxiconazole, tebuconazole, fluoxastrobin, picoxystrobin, pyraclostrobin, quinoxyfen, benthiavalicarb, cymoxanil, and dithianon
in a synergistically effective amount.

**2.** Pesticidal mixtures according to claim 1, wherein the substituents of the compound I of formula (I) have the following meanings:

$R^1$ is $CF_3$
or an enantiomer or a diastereomer thereof, pure or as mixtures of these enantiomers and/or diastereomers.

**3.** Pesticidal mixtures according to claim 1, wherein the substituents of the compound I of formula (I) have the following meanings:

$R^1$ is Cl

or an enantiomer or a diastereomer thereof, pure or as mixtures of these enantiomers and/or diastereomers.

**4.** Pesticidal mixtures according to claim 1 or 2, wherein the substituents of the compound 1 of formula (I) have the following meanings:

G is $G^1$
and
$R^2$ is $CH_3$

or an enantiomer or a diastereomer thereof, pure or as mixtures of these enantiomers and/or diastereomers.

**5.** Pesticidal mixtures according to claim 1 or 2, wherein the substituents of the compound I of formula (I) have the following meanings:

G is $G^2$
and
$R^2$ is hydrogen

or an enantiomer or a diastereomer thereof, pure or as mixtures of these enantiomers and/or diastereomers.

**6.** Pesticidal mixtures according to claim 1 or 2, wherein the substituents of the active compound I of formula I have the following meanings:

G is $G^1$
and
$R^2$ is hydrogen, chloro or $C_2H_5$;

or an enantiomer or a diastereomer thereof, pure or as mixtures of these enantiomers and/or diastereomers.

**7.** The pesticidal mixture according to claim 1, 2 or 4, comprising a compound I of the formula (I) and a compound II in a weight ratio of from 100:1 to 1:100.

**8.** A pesticidal composition, comprising a liquid or solid carrier and a mixture of at least one active compound I and at least one active compound II according to any of claims 1 to 7.

**9.** A method for controlling phythopathogenic harmful fungi, wherein the fungi, their habitat or the plants to be protected against fungal attack, the soil or seed are treated with an effective amount of a mixture of at least one active compound I and at least one active compound II according to any of claims 1 to 7.

**10.** A method for protecting plants from phytopathogenic harmful fungi, wherein the fungi, their habitat or the plants to be protected against fungal attack, the soil or seed are treated with an effective amount of a mixture of at least one active compound I and at least one active compound II according to any of claims 1 to 7.

**11.** A method for controlling insects, arachnids or nematodes comprising contacting an insect, acarid or nematode or their food supply, habitat, breeding grounds or their locus with an effective amount of a mixture of at least one active compound I and at least one active compound II according to any of claims 1 to 7.

**12.** A method for protecting plants from attack or infestation by insects, acarids or nematodes comprising contacting the plant, or the soil or water in which the plant is growing with an effective amount of a mixture of at least one active compound I and at least one active compound II according to any of claims 1 to 7.

**13.** A method according to claims 9 to 12, wherein the mixture as claimed in claims 1 to 7 is applied in an amount of from 5 g/ha to 2000 g/ha.

**14.** A method for protection of seed comprising contacting the seeds with an effective amount of a mixture of at least one active compound I and at least one active compound II according to any of claims 1 to 7.

**15.** A method according to claim 14 wherein the mixture of the active compound I and the active compound II according to any of claims 1 to 7 is applied in an amount of from 0.001 g to 10 kg per 100 kg of seeds.

**16.** Seed, comprising the mixture of at least one active compound I and at least one active compound II according to any of claims 1 to 7 in an amount of from 0.1 g to 10 kg per 100 kg of seeds.

**17.** Use of a mixture as defined in claims 1 to 7 for combating insects, arachnids or nematodes.

**18.** Use of a mixture as defined in claims 1 to 7 for combating phytopathogenic harmful fungi.

**Patentansprüche**

**1.** Pestizide Mischung, die mindestens zwei Wirkstoffe, wobei

1) mindestens ein Wirkstoff I eine Cyanosulfoximinverbindung der folgenden Formel (I)

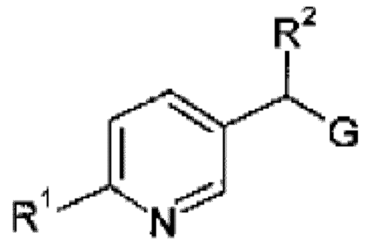

Formel (I)

bedeutet, worin

G aus

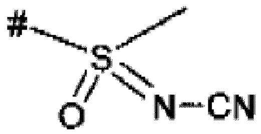
(G¹)

oder

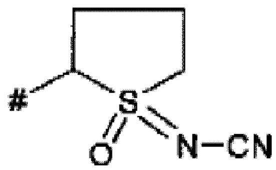
(G²)

ausgewählt ist und worin # die Bindung in Formel I bezeichnet;
$R^1$ Cl oder $CF_3$ ist

und

$R^2$ aus Wasserstoff, Chlor, $CH_3$ oder $C_2H_5$ ausgewählt ist;

oder ein Enantiomer oder ein Diastereomer davon, rein oder als Mischungen dieser Enantiomere und/oder Diastereomere, ist
und
2) mindestens ein Wirkstoff II eine fungizide Verbindung, ausgewählt aus Epoxiconazol, Tebuconazol, Fluoxastrobin, Picoxystrobin, Pyraclostrobin, Quinoxyfen, Benthiavalicarb, Cymoxanil und Dithianon, ist,
in einer synergistisch wirksamen Menge umfasst.

**2.** Pestizide Mischungen nach Anspruch 1, wobei die Substituenten der Verbindung I der Formel (I) die folgenden Bedeutungen aufweisen:

$R^1$ bedeutet $CF_3$

oder ein Enantiomer oder ein Diastereomer davon, rein oder als Mischungen dieser Enantiomere und/oder Diastereomere.

**3.** Pestizide Mischungen nach Anspruch 1, wobei die Substituenten der Verbindung I der Formel (I) die folgenden Bedeutungen aufweisen:

$R^1$ bedeutet Cl

oder ein Enantiomer oder ein Diastereomer davon, rein oder als Mischungen dieser Enantiomere und/oder Diastereomere.

**4.** Pestizide Mischungen nach Anspruch 1 oder 2, wobei die Substituenten der Verbindung I der Formel (I) die folgenden Bedeutungen aufweisen:

G bedeutet $G^1$

und
$R^2$ bedeutet $CH_3$

oder ein Enantiomer oder ein Diastereomer davon, rein oder als Mischungen dieser Enantiomere und/oder Diastereomere.

**5.** Pestizide Mischungen nach Anspruch 1 oder 2, wobei die Substituenten der Verbindung I der Formel (I) die folgenden Bedeutungen aufweisen:

G bedeutet $G^2$ und
$R^2$ bedeutet Wasserstoff

oder ein Enantiomer oder ein Diastereomer davon, rein oder als Mischungen dieser Enantiomere und/oder Diastereomere.

**6.** Pestizide Mischungen nach Anspruch 1 oder 2, wobei die Substituenten des Wirkstoffs I der Formel (I) die folgenden Bedeutungen aufweisen:

G bedeutet $G^1$ und
$R^2$ bedeutet Wasserstoff, Chlor oder $C_2H_5$

oder ein Enantiomer oder ein Diastereomer davon, rein oder als Mischungen dieser Enantiomere und/oder Diastereomere.

**7.** Pestizide Mischung nach Anspruch 1, 2 oder 4, die eine Verbindung I der Formel (I) und eine Verbindung II in einem Gewichtsverhältnis von 100:1 bis 1:100 umfasst.

**8.** Pestizide Zusammensetzung, die einen flüssigen oder festen Träger und eine Mischung von mindestens einem Wirkstoff I und mindestens einem Wirkstoff II nach einem der Ansprüche 1 bis 7 umfasst.

**9.** Verfahren zum Bekämpfen von phytopathogenen Schadpilzen, wobei die Pilze, ihr Lebensraum oder die gegen Pilzbefall zu schützenden Pflanzen, der Boden oder Samen mit einer wirksamen Menge einer Mischung von mindestens einem Wirkstoff I und mindestens einem Wirkstoff II nach einem der Ansprüche 1 bis 7 behandelt werden.

**10.** Verfahren zum Schützen von Pflanzen gegen phytopathogene Schadpilze, wobei die Pilze, ihr Lebensraum oder die gegen Pilzbefall zu schützenden Pflanzen, der Boden oder Samen mit einer wirksamen Menge einer Mischung von mindestens einem Wirkstoff I und mindestens einem Wirkstoff II nach einem der Ansprüche 1 bis 7 behandelt werden.

**11.** Verfahren zum Bekämpfen von Insekten, Arachnida oder Nematoden, bei dem man ein Insekt, eine Milbe oder ein Nematode oder ihre Nahrungsgrundlage, ihren Lebensraum, ihre Brutstätten oder den Ort ihres Vorkommens mit einer wirksamen Menge einer Mischung von mindestens einem Wirkstoff I und mindestens einem Wirkstoff II nach einem der Ansprüche 1 bis 7 in Kontakt bringt.

**12.** Verfahren zum Schützen von Pflanzen gegen Befall oder Verseuchung durch Insekten, Milben oder Nematoden, bei dem man die Pflanze, oder den Boden oder das Wasser, worin die Pflanze wächst, mit einer wirksamen Menge einer Mischung von mindestens einem Wirkstoff I und mindestens einem Wirkstoff II nach einem der Ansprüche 1 bis 7 in Kontakt bringt.

**13.** Verfahren nach den Ansprüchen 9 bis 12, wobei die Mischung nach den Ansprüchen 1 bis 7 in einer Menge von 5 g/ha bis 2 000 g/ha ausgebracht wird.

**14.** Verfahren zum Schützen von Saatgut, bei dem man die Samen mit einer wirksamen Menge einer Mischung von mindestens einem Wirkstoff I und mindestens einem Wirkstoff II nach einem der Ansprüche 1 bis 7 in Kontakt bringt.

**15.** Verfahren nach Anspruch 14, wobei die Mischung an Wirkstoff I und Wirkstoff II nach einem der Ansprüche 1 bis 7 in einer Menge von 0,001 g bis 10 kg pro 100 kg Samen appliziert wird.

**16.** Saatgut, umfassend die Mischung an mindestens einem Wirkstoff I und mindestens einem Wirkstoff II nach einem der Ansprüche 1 bis 7 in einer Menge von 0,1 g bis 10 kg pro 100 kg Samen.

**17.** Verwendung einer Mischung wie in den Ansprüchen 1 bis 7 definiert zum Bekämpfen von Insekten, Arachnida oder Nematoden.

**18.** Verwendung einer Mischung wie in den Ansprüchen 1 bis 7 definiert zum Bekämpfen von phytopathogenen Schadpilzen.

## Revendications

**1.** Mélange pesticide comprenant au moins deux matières actives, dans lequel

1) au moins une matière active I est un composé cyanosulfoximine de formule (I)

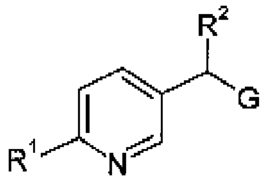

formule (I)

dans laquelle

G est choisi parmi

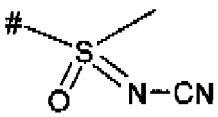 (G1) ou 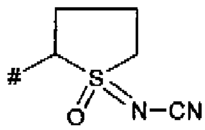 (G2)

et # désigne la liaison dans la formule I ;
$R^1$ est Cl ou $CF_3$, et
$R^2$ est choisi parmi l'atome d'hydrogène, le groupe chloro, $CH_3$ ou $C_2H_5$ ;

ou énantiomère ou diastéréoisomère de ce composé, pur ou sous forme de mélanges de ces énantiomères et/ou diastéréoisomères,
et
2) au moins une matière active II est un composé fongicide choisi parmi l'époxiconazole, le tébuconazole, la fluoxastrobine, la picoxystrobine, la pyraclostrobine, le quinoxyfène, le benthiavalicarbe, le cymoxanil et le dithianon,
en une quantité à effet synergique.

**2.** Mélanges pesticides selon la revendication 1, dans lesquels les substituants du composé I de formule (I) ont les significations suivantes :

$R^1$ est $CF_3$

ou énantiomère ou diastéréoisomère de celui-ci, pur ou sous forme de mélanges de ces énantiomères et/ou diastéréoisomères.

**3.** Mélanges pesticides selon la revendication 1, dans lesquels les substituants du composé I de formule (I) ont les significations suivantes :

$R^1$ est Cl

ou énantiomère ou diastéréoisomère de celui-ci, pur ou sous forme de mélanges de ces énantiomères et/ou diastéréoisomères.

**4.** Mélanges pesticides selon la revendication 1 ou 2, dans lesquels les substituants du composé I de formule (I) ont les significations suivantes :

G est $G^1$,
et
$R^2$ est $CH_3$,

ou énantiomère ou diastéréoisomère de celui-ci, pur ou sous forme de mélanges de ces énantiomères et/ou diastéréoisomères.

**5.** Mélanges pesticides selon la revendication 1 ou 2, dans lesquels les substituants du composé I de formule (I) ont les significations suivantes :

G est $G^2$, et
$R^2$ est un atome d'hydrogène

ou énantiomère ou diastéréoisomère de celui-ci, pur ou sous forme de mélanges de ces énantiomères et/ou diastéréoisomères.

**6.** Mélanges pesticides selon la revendication 1 ou 2, dans lesquels les substituants de la matière active I de formule (I) ont les significations suivantes :
G est $G^1$,
et
$R^2$ est un atome d'hydrogène, un groupe chloro ou $C_2H_5$ ; ou énantiomère ou diastéréoisomère de celle-ci, pur ou sous forme de mélanges de ces énantiomères et/ou diastéréoisomères.

**7.** Mélanges pesticides selon la revendication 1, 2 ou 4, comprenant un composé I de formule (I) et un composé II selon un rapport en poids de 100:1 à 1:100.

**8.** Composition pesticide comprenant un support liquide ou solide et un mélange d'au moins une matière active I et d'au moins une matière active II selon l'une quelconque des revendications 1 à 7.

**9.** Procédé de maîtrise des champignons phytopathogènes nuisibles, dans lequel les champignons, leur habitat ou les plantes à protéger d'une attaque fongique, le sol ou la semence, sont traités avec une quantité efficace d'un mélange d'au moins une matière active I et d'au moins une matière active II selon l'une quelconque des revendications 1 à 7.

**10.** Procédé de protection de plantes vis-à-vis de champignons phytopathogènes nuisibles, dans lequel les champignons, leur habitat ou les plantes à protéger d'une attaque fongique, le sol ou la semence, sont traités avec une quantité efficace d'un mélange d'au moins une matière active I et d'au moins une matière active II selon l'une quelconque des revendications 1 à 7.

**11.** Procédé de maîtrise des insectes, des arachnides ou des nématodes, comprenant la mise en contact d'un insecte, d'un acarien ou d'un nématode, ou de leurs sources de nourriture, de leur habitat, de leurs zones de reproduction ou de leur locus, avec une quantité efficace d'un mélange d'au moins une matière active I et d'au moins une matière active II selon l'une quelconque des revendications 1 à 7.

**12.** Procédé de protection de plantes vis-à-vis d'une attaque ou d'une infestation par des insectes, des acariens ou des nématodes, comprenant la mise en contact de la plante, ou du sol ou de l'eau dans lequel la plante croît, avec une quantité efficace d'un mélange d'au moins une matière active I et d'au moins une matière active II selon l'une quelconque des revendications 1 à 7.

**13.** Procédé selon les revendications 9 à 12, dans lequel le mélange tel que revendiqué dans les revendications 1 à 7

est appliqué en une quantité de 5 g/ha à 2000 g/ha.

**14.** Procédé de protection de semences, comprenant la mise en contact des semences avec une quantité efficace d'un mélange d'au moins une matière active I et d'au moins un matière active II selon l'une quelconque des revendications 1 à 7.

**15.** Procédé selon la revendication 14, dans lequel le mélange de la matière active I et de la matière active II selon l'une quelconque des revendications 1 à 7 est appliqué en une quantité de 0,001 g à 10 kg par 100 kg de semences.

**16.** Semence comprenant le mélange d'au moins une matière active I et d'au moins une matière active II selon l'une quelconque des revendications 1 à 7, en une quantité de 0,1 g à 10 kg par 100 kg de semences.

**17.** Utilisation d'un mélange tel que défini dans les revendications 1 à 7 pour combattre les insectes, les arachnides ou les nématodes.

**18.** Utilisation d'un mélange tel que défini dans les revendications 1 à 7 pour combattre des champignons phytopathogènes nuisibles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050228027 A
- WO 2006060029 A
- WO 2007095229 A
- EP 196038 A
- GB 857383 A
- US 5240940 A
- JP 9323984 A
- US 3957847 A
- WO 9727189 A
- EP 278595 A
- WO 9601256 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A
- WO 9828279 A
- EP 454621 A1
- WO 9828277 A
- EP 462456 A1
- US 4822779 A
- JP 2002193709 B
- WO 0100614 A
- WO 9845274 A
- US 6335357 B
- US 6221890 B
- JP 21010907 B
- WO 03007717 A
- WO 03007718 A
- US 6300348 B
- WO 0170671 A
- WO 03015519 A
- WO 05118552 A
- WO 04067528 A
- WO 04080180 A
- EP 1097932 A
- JP 2006131529 B
- WO 0563694 A
- EP 0242236 A
- EP 242246 A
- WO 9200377 A
- EP 0257993 A
- US 5013659 A
- EP 0142924 A
- EP 0193259 A
- WO 9211376 A
- WO 9214827 A
- WO 9119806 A
- WO 9113972 A


### Non-patent literature cited in the description


- Agglomeration. **BROWNING.** Chemical Engineering. 04 December 1967, 147-48
- Perry's Chemical Engineer's Handbook. McGraw-Hill, 1963, 8-57
- **KLINGMAN.** Weed Control as a Science. John Wiley and Sons, Inc, 1961
- **HANCE et al.** Weed Control Handbook. Blackwell Scientific Publications, 1989
- **MOLLET, H. ; GRUBEMANN, A.** Formulation technology. WileyVCH Verlag GmbH, 2001
- **D. A. KNOWLES.** Chemistry and Technology of Agrochemical Formulations. Kluwer Academic Publishers, 1998
- The Pesticide Manual. British Crop Protection Council, 2003
- Agro Project. PJB Publications Ltd, November 2004
- Farm Chemicals Handbook. Meister Publishing Company, 2001, vol. 88
- *Pesticide Science,* 1988, vol. 54, 237-243